# EUROPEAN PATENT APPLICATION

(11) **EP 4 471 963 A1**
(43) Date of publication of application: **04.12.2024**
(21) Application number: 23746726.1
(22) Date of filing: 16.01.2023
(51) Int. Cl.: H01M 50/429, H01M 4/525, H01M 10/052, H01M 50/403, H01M 50/417, H01M 50/434, H01M 50/443, H01M 50/446, H01M 50/449, H01M 50/451, H01M 50/489

(54) **SECONDARY CELL SEPARATOR, MANUFACTURING METHOD THEREFOR, AND SECONDARY CELL**

(30) Priority: 28.01.2022 JP 2022011907
(71) Applicant: Panasonic Intellectual Property Management Co., Ltd., Kadoma-shi, Osaka 571-0057 (JP)
(72) Inventor: HASEGAWA Chisaki, Kadoma-shi, Osaka 571-0057 (JP); OKI Yukihiro, Kadoma-shi, Osaka 571-0057 (JP); SHIRAKAMI Atsuro, Kadoma-shi, Osaka 571-0057 (JP); ASANO Kazuko, Kadoma-shi, Osaka 571-0057 (JP)
(74) Representative: Novagraaf International SA
(86) International application number: PCT/JP2023/001001
(87) International publication number: WO 2023/145512

(57) **Abstract**

A separator for a secondary battery including a porous substrate having a first surface and a second surface opposite the first surface, and a polysaccharide attached to pore inner walls of the porous substrate. The polysaccharide has a carboxyl group.

## Description

### [Technical Field]

The present disclosure mainly relates to a separator for a secondary battery.

### [Background Art]

Conventionally, studies have been made on improvements to the separator for the purpose of improving battery characteristics.

For example, Patent Literature 1 proposes a manganese dry battery characterized by including a separator coated with a glue paste containing xanthan gum. The literature says that the liquid retention ability, gel-forming property, and viscosity stability against pH and temperature of the xanthan gum make it possible to provide a manganese dry battery excellent in leakage prevention properties and in discharge performance and pulse discharge characteristics.

Furthermore, a separator for batteries containing inorganic fine particles has been developed in order to suppress short-circuiting due to an impact from outside or heat shrinkage of the film serving as a substrate. With an aim to obtain a separator coating liquid for batteries which exhibits excellent fine particle dispersibility even when exposed to harsh and severe conditions and has excellent storage stability and good coating properties, Patent Literature 2 proposes a separator coating liquid which contains fine particles, a fibrous cellulose with a fiber width of 1000 nm or less, and a water-soluble polymer.

Patent Literature 3 discloses a separator membrane for batteries including an active layer formed by coating at least one region selected from the group consisting of (a) a polyolefin-based substrate and (b) a surface of the substrate and part of a porous portion present in the substrate, with a mixture of inorganic particles and a binder. In the active layer, the inorganic particles are joined and fixed to each other by the binder, and the interstitial volume between the inorganic particles forms a porous structure. The literature says that according to the proposed separator membrane for batteries, the binder-to-inorganic material adhesion and the substrate-to-binder adhesion can be enhanced, and internal short-circuiting can be prevented in advance by the self-healing function to a partial damage in the separator membrane. Moreover, the adhesion of the separator membrane to the positive and the negative electrodes can be improved, and the elution of a transition metal from the positive electrode material can be coped with.

### [Citation List]

### [Patent Literature]

Patent Literature 1: Japanese Laid-Open Patent Publication No. H6-231744
Patent Literature 2: Japanese Laid-Open Patent Publication No. 2018-63924
Patent Literature 3: Japanese Patent No. 6824558

### [Summary of Invention]

### [Technical Problem]

In a secondary battery including a lithium-ion conductive nonaqueous electrolyte, the higher the end-of-charge voltage is, the more the elution amount of metal ions from the positive electrode tends to increase. Upon reaching the negative electrode through electrophoresis, the eluted metal ions deposit as a metal at the negative electrode, which can be a cause of deterioration in the safety and the load characteristics of the battery.

Applying an organic polymer having an anionic functional group capable of trapping metal ions onto the separator can be expected to suppress the metal deposition at the negative electrode. However, it is difficult to uniformly apply an organic polymer having an anionic functional group with high polarity onto the separator surface with low polarity. Even if it was able to be applied, the organic polymer readily aggregates, to block the pores of the separator with the organic polymer. The load characteristics of the battery therefore tends to deteriorate.

### [Solution to Problem]

One aspect of the present disclosure relates to a separator for a secondary battery, including: a porous substrate having a first surface and a second surface opposite the first surface; and a first polysaccharide attached to pore inner walls of the porous substrate, the first polysaccharide having a carboxyl group.

Another aspect of the present disclosure relates to a secondary battery, including: a positive electrode; a negative electrode; a lithium-ion conductive nonaqueous electrolyte; and a separator interposed between the positive electrode and the negative electrode, wherein the separator is the above-described separator for a secondary battery, and the first surface is faced to the positive electrode.

Further another aspect of the present disclosure relates to a method for producing a separator for a secondary battery, the method including: a step of preparing a porous substrate having a first surface and a second surface opposite the first surface; a step of preparing a solution of a first polysaccharide having a carboxyl group; an application step of applying the solution onto the porous substrate; and a drying step of drying the porous substrate applied with the solution.

### [Advantageous Effects of Invention]

The polysaccharide having a carboxyl group attached to the porous substrate effectively acts to trap metal ions, is unlikely to block the pores of the porous substrate, and improves the wettability of the separator with nonaqueous electrolyte. It is therefore possible to suppress the metal deposition at the negative electrode, and improve the load characteristics of the secondary battery.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawing]

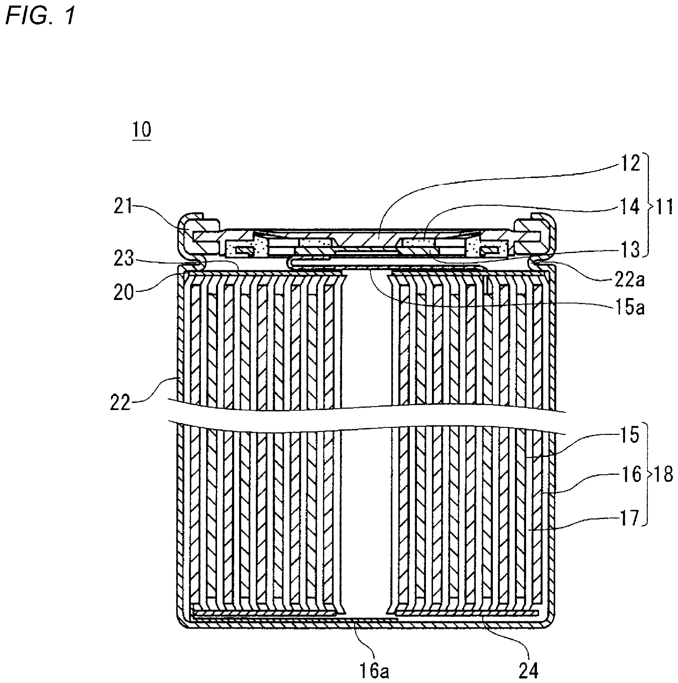

[FIG. 1] A schematic longitudinal cross-sectional view of the internal structure of a secondary battery according to an embodiment of the present disclosure.

### [Description of Embodiments]

Embodiments of a separator for a secondary battery according to the present disclosure and a secondary battery using the separator will be described below by way of examples, but the present disclosure is not limited to the examples described below. In the following description, specific numerical values and materials are exemplified in some cases, but other numerical values and other materials may be adopted as long as the effects of the present disclosure can be obtained. In the present specification, when referring to "a range of a numerical value A to a numerical value B," the range includes the numerical value A and the numerical value B, and can be rephrased as "a numerical value A or more and a numerical value B or less." In the following description, when the lower and upper limits of numerical values related to specific physical properties, conditions, etc. are mentioned as examples, any one of the mentioned lower limits and any one of the mentioned upper limits can be combined in any combination as long as the lower limit is not equal to or more than the upper limit. When a plurality of materials are mentioned as examples, one kind of them may be selected and used singly, or two or more kinds of them may be used in combination.

### A. Separator for secondary battery

A separator for a secondary battery according to the present disclosure includes a porous substrate, and a polysaccharide attached to the pore inner walls of the porous substrate. Here, "attached to the pore inner walls" means that the polysaccharide is attached so as to cover at least part of the pore inner walls, with the space within the pores maintained. The polysaccharide may cover in the form of a film at least part of the pore inner walls along the contour of the pore inner walls. Note that, there is a tendency for carboxymethyl cellulose (CMC) and its derivatives, for example, to aggregate and hardly enter the pores, and even when having entered, block the spaces within the pores. Therefore, at least CMC and its derivatives are excluded from the polysaccharide attached to the pore inner walls of the porous substrate.

The polysaccharide has in its molecule one or more or a plurality of carboxyl groups (-CO₂X or -CO₂⁻). The polysaccharide, which abundantly contains a hydrophilic group and whose molecular weight is relatively large, barely dissolves in the nonaqueous electrolyte in the battery, and can stay fixed onto the porous substrate over a long time without peeled off.

The carboxyl group may be any type selected from an acid type (-CO₂X where X is H), a salt type (-CO₂X where X is a cation), and an anion type (-CO₂⁻). The cation contained in the carboxyl group as the X may be a metal ion, may be an organic cation, and may be an ammonium ion (NH₄⁺).

The metal ion can be a cation of an alkali metal, an alkaline earth metal, and the like, and can be a cation of, for example, barium, calcium, magnesium, potassium, sodium, lithium, and the like.

The plurality of carboxyl groups that the polysaccharide has in its molecule may be of the same type (form) or may be of different types. For example, a polysaccharide having a salt-type carboxyl group may have two or more kinds of carboxyl groups including different cations. Furthermore, a plurality of kinds of polysaccharides having different molecular structures may be used in combination and attached to the porous substrate, or only one kind of polysaccharide may be attached to the porous substrate.

The porous substrate has a first surface and a second surface opposite the first surface. In other words, the porous substrate may be in the form of a membrane, sheet or film. The porous substrate can be a stretched film, a non-woven fabric, a woven fabric, and the like.

In the porous substrate, the first surface and the second surface may be both constituted of a polyolefin. A first polysaccharide having a carboxyl group is attached to the pore inner walls of the porous substrate whose first surface and second surface are both constituted of a polyolefin. This makes it possible to obtain a separator for a secondary battery that has an action of suppressing the metal deposition at the negative electrode and improving the load characteristics of the secondary battery. Usually, it is difficult to attach a polysaccharide which is highly hydrophilic to the pore inner walls of a porous substrate whose first and second surfaces are both constituted of a polyolefin. However, by using a predetermined method to attach the first polysaccharide having a carboxyl group to the porous substrate, the first polysaccharide can be attached as far as to the pore inner walls.

The separator for a secondary battery including a porous substrate and a first polysaccharide attached to the porous substate can suppress the metal deposition at the negative electrode and improve the load characteristics of the secondary battery. This is presumably because of the following reasons.

Firstly, the first polysaccharide can be a barrier that suppresses the movement of metal ions between the electrodes. The carboxyl group of the first polysaccharide can efficiently trap impurities and metal ions eluted from the positive electrode. The ability of the carboxyl group to trap metal ions is high.

Secondly, the first polysaccharide includes a polysaccharide which has a property of readily attaching to a porous substrate, but on the other hand, is unlikely to block the pores of the porous substrate. Such a first polysaccharide exhibits high solubility in a predetermined hydrophilic solvent, and can easily attach thinly and uniformly along the pore inner walls of the porous substrate. Therefore, the phenomenon in which the first polysaccharide closes the openings of the pores is likely to be avoided, and the first polysaccharide is likely to be avoided from being packed into the pores. The high solubility of the first polysaccharide is considered to be derived from the properties of the carboxyl group with high ionicity.

Thirdly, the first polysaccharide has a tendency to improve the wettability of the porous substrate (i.e., the separator) with nonaqueous electrolyte. The first polysaccharide is barely soluble in nonaqueous electrolyte, but on the other hand, as compared to a porous substrate (esp., polyolefin) which is typically used as a separator for a secondary battery, has a high affinity for nonaqueous electrolyte. The separator constituted of a porous substrate with a first polysaccharide attached thereto has higher wettability with nonaqueous electrolyte than a separator containing no first polysaccharide. As a result, a secondary battery including the separator constituted of a porous substrate with a first polysaccharide attached thereto has more improved load characteristics than a secondary battery including the separator containing no first polysaccharide.

The effect of suppressing the movement of metal ions by the first polysaccharide is noticeable, for example, when a impurity metal, such as copper and iron, is present in the secondary battery. When the impurity metal is exposed to the positive electrode potential, metal ions elute from the impurity metal into the nonaqueous electrolyte. Furthermore, in a secondary battery with the upper limit voltage set high, metal ions can elute also from the active material particles contained in the positive electrode. For example, the positive electrode potential is high in a secondary battery with the upper limit voltage set above 4.3 V, and the positive electrode active material particles contains a metal component (a transition metal, in many cases), and therefore, metal ions can elute. The metal ions eluted into the nonaqueous electrolyte move from the positive electrode side to the negative electrode side and deposit as an impurity metal. On the other hand, when the first polysaccharide is contained in the separator, the movement of the eluted metal ions between the electrodes can be significantly suppressed. Hereinafter, metal ions that can deposit as an impurity metal at the negative electrode are sometimes referred to as impurity metal ions.

While the first polysaccharide in the separator is fixed on the pore inner walls of the porous substrate, the impurity metal ions eluted into the nonaqueous electrolyte on the positive electrode side pass through the separator when moving to the negative electrode side. Therefore, the impurity metal ions are trapped with a higher probability by the first polysaccharide. The trapped metal ions, like the first polysaccharide, become fixed on the porous substrate and restricted from moving freely. Therefore, the movement of impurity metal ions from the positive electrode side to the negative electrode side can be significantly suppressed.

The first polysaccharide exhibits high solubility in a predetermined hydrophilic solvent, and easily permeates into the porous substrate. Therefore, the first polysaccharide can attach thinly along the pore inner walls of the porous substrate, and is unlikely to attach excessively thickly to the surface of the porous substrate.

The polysaccharide is considered to cover in the form of a very thin film at least part of the pore inner walls, along the contour of the pore inner walls. The thickness of the first polysaccharide attached to the pore inner walls of the porous substrate is preferably 40 nm or less, and may be 20 nm or less. The thickness of the first polysaccharide may be determined by, in a cross section obtained by cutting the separator along the thickness direction, selecting 10 spots where the pore inner walls are covered with the first polysaccharide, measuring the largest thickness in each of the 10 spots, and calculating an average of the measured values. At this time, a thermosetting resin may be packed into the separator and cured. For example, CP (cross-section polisher) method, FIB (focused ion beam) method, or the like may be used to obtain a cross-section sample of the separator. Furthermore, in the thickness direction of the porous substrate, the distance in the thickness direction between the first polysaccharide located outermost on the first surface side and the polyolefin located outermost on the first surface side may be 10 nm or less. Such a distance can correspond, practically, to the thickness of the film formed of the first polysaccharide.

The air permeability measured by a method specified in JIS P 8117 of the separator for a secondary battery according to the present disclosure (i.e., a separator containing a porous substrate and a first polysaccharide attached thereto (hereinafter sometimes referred to as the "separator (S)")) may be, for example, 100 sec/100 mL or more and 500 sec/100 mL or less, and may be 400 sec/100 mL or less. Since the first polysaccharide is unlikely to block the pores of the porous substrate, such a low air permeability can be easily ensured. In general, the smaller the numerical value of the air permeability is, the larger the pore volume of the separator tends to be.

Polysaccharide is a general term for polymers having a structure in which a plurality of monosaccharide molecules are linked via glycosidic bonds. The first polysaccharide is not particularly limited, but in view of ensuring the ease of production of the separator, preferably has, for example, a property of dissolving in a mixed solvent of water and alcohol (e.g., a mixed solvent of water and ethanol at a volume ratio of 50:50). Water contributes to dissolving the first polysaccharide, and alcohol or ethanol contributes to improving the permeability of the first polysaccharide dissolved in water into the porous substrate.

Examples of the basic structure of the first polysaccharide that can be used include aldose, ketose, pyranose, and furanose. Examples of monosaccharide molecules (monomers) constituting the first polysaccharide include triose, tetrose, pentose, hexose, and heptose. In particular, aldopentose, ketopentose, aldohexose, ketohexose, and the like are desirable, and, for example, galactose, glucose, and mannose, which are categorized as aldohexose, can be used. For example, the first polysaccharide may have the backbone of a galactose polymer, a glucose polymer, or a mannose polymer. The first polysaccharide may be obtained by introducing a carboxyl group into a polymer of these monosaccharides.

As the first polysaccharide, a polysaccharide originally having a carboxyl group can also be used. Examples of the polysaccharide having a carboxyl group include arabic gum, xanthan gum, pectin, gellan gum, agar, alginic acid, heparin, hyaluronic acid, and gelatin. The first polysaccharide may be obtained by introducing a carboxyl group into pullulan, mannan, guar gum, starch, glycogen, chitin, agarose, carrageenan, glucomannan, gelatin, dextran, or the like.

The first polysaccharide preferably includes at least one of arabic gum and xanthan gum. The content of the arabic gum and/or the xanthan gum in the first polysaccharide attached to the porous substrate (i.e., contained in the separator) may be, for example, 70 mass% or more, and may be 100 mass%.

In addition to the first polysaccharide, a second polysaccharide having a sulfo group may be attached to the porous substrate. The sulfo group also, like the carboxyl group, exhibits high hydrophilicity, and a separator containing a second polysaccharide having a sulfo group also, like the separator containing a first polysaccharide having a carboxyl group, acts to suppress the metal deposition at the negative electrode, and can improve the load characteristics of the secondary battery.

Examples of the basic structure of the secondary polysaccharide include aldose, ketose, pyranose, and furanose. Examples of monosaccharide molecules (monomers) constituting the second polysaccharide include triose, tetrose, pentose, hexose, and heptose. In particular, aldopentose, ketopentose, aldohexose, ketohexose, and the like are desirable, and for example, galactose, which is categorized as aldohexose, can be used. For example, the second polysaccharide may have the backbone of a galactose polymer. The second polysaccharide may be obtained by subjecting a polymer of these monosaccharides to sulfuric acid esterification.

A polysaccharide that originally has a sulfo group (e.g., carrageenan) may be used. The second polysaccharide may be obtained by subjecting pectin, alginic acid, pullulan, mannan, xanthan gum, guar gum, starch, glycogen, chitin, dextran, agarose, carrageenan, heparin, hyaluronic acid, glucomannan, arabic gum, gelatin, tremelle gum, or the like, to sulfuric acid esterification. In particular, carrageenan can be preferably used. Carrageenan is categorized into several types, such as kappa, iota, and lambda, any of which may be used.

The content of the carrageenan in the second polysaccharide attached to the porous substrate (i.e., contained in the separator) may be, for example, 70 mass% or more. The carrageenan may occupy 100 mass% of the second polysaccharide.

When the second polysaccharide is attached together with the first polysaccharide to the porous substrate, the mass ratio between the attached amounts of the first polysaccharide and the second polysaccharide is not particularly limited. The content of the first polysaccharide in the total of the first polysaccharide and the second polysaccharide may be, for example, 50 mass% or more, may be 70 mass% or more, and may be 90 mass% or more.

That the separator contains the first polysaccharide can be simply confirmed by analyzing an infrared absorption spectrum obtained by FT-IR measurement of the separator. Various first polysaccharides exhibit their own unique spectra. Peaks that can be observed in the spectrum include, for example, those attributed to monosaccharide molecular species (e.g., in the case of arabic gum, C-O bond etc. included in the galactose skeleton and the glucose skeleton), C=O bond, O-H bond, and the like.

Likewise, when the separator contains the second polysaccharide, too, it can be confirmed by analyzing an infrared absorption spectrum obtained by FT-IR measurement of the separator. Peaks that can be observed in the spectrum include, for example, those attributed to monosaccharide molecular species (e.g., in the case of carrageenan, C-O bond etc. included in the galactose skeleton), S=O bond, C-O-S bond, and the like.

Furthermore, that the separator contains a carboxyl group bonded to the first polysaccharide can be confirmed by mass spectrometry (e.g., GC-MS (gas chromatography mass spectrometry), etc.), FT-IR, and the like. When the separator contains the second polysaccharide, too, it can be confirmed similarly by these methods.

The number of moles of the carboxyl group included in the first polysaccharide per unit mass is, for example, 1.0×10⁻⁶ mol/g or more and 1.0×10⁻² mol/g or less, may be 1.0×10⁻⁵ mol/g or more and 1.0x 10⁻² mol/g or less, may be 1.0x 10⁻⁴ mol/g or more and 1.0×10⁻² mol/g or less, and may be 1.0×10⁻³ mol/g or more and 1.0×10⁻² mol/g or less. A polysaccharide in which the carboxyl group content is high has an ability of trapping more metal ions and excellent solubility in a mixed solvent of water and alcohol (esp., ethanol), and is likely to attach thinly and uniformly to the pore inner walls of the porous substrate.

The amount of the first polysaccharide attached to the porous substrate per apparent unit area (hereinafter sometimes referred to as the "area density of the first polysaccharide"), for example, is 1.0×10⁻⁵ g/m² or more and 5.0×10⁻¹ g/m² or less, is 1.0×10⁻⁵ g/m² or more and 1.0×10⁻¹ g/m² or less, is 1.0×10⁻⁵ g/m² or more and 1.0×10⁻² g/m² or less, may be 1.0×10⁻⁴ g/m² or more and 1.0×10⁻² g/m² or less, and may be 1.0×10⁻³ g/m² or more and 1.0×10⁻² g/m² or less. The apparent unit area means one unit (1 m²) of the area surrounded by the outline of the projected image of the porous substrate when viewed in the direction normal to the first surface and the second surface of the porous substrate.

To determine the area density of the first polysaccharide, first, a sample of a predetermined size is cut out from the separator, and the sample is heated to dry at 60 °C for 1 hour or more, and then, a dry mass W1 is measured. Next, the dry sample is immersed in a mixed solvent of water and ethanol at a volume ratio of 50:50 (20 °C to 30 °C) for 1 hour, and then thoroughly washed with a mixed solvent of water and ethanol at a volume ratio of 50:50, followed by heating to dry at 60 °C for 1 hour or more, and then, a dry mass W2 is measured. The first polysaccharide is, practically, completely removed through immersion in the mixed solvent and washing with the mixed solvent. The area density of the first polysaccharide is determined from the dry masses W1 and W2 and the size (apparent area) of the sample.

The area density of the first polysaccharide may be determined from a sample of the separator taken out from a secondary battery in a fully discharged state (SOC = 0%). In that case, before using as a sample, the separator may be thoroughly washed with dimethyl carbonate (DMC), and then dried under vacuum.

In the separator (S), the distribution of the first polysaccharide may be varied within the porous substrate in its thickness direction. For example, the first polysaccharide may be more distributed near the surface facing the positive electrode which is to be an elution source of metal ions. This shortens the distance over which the metal ions eluted from the positive electrode can migrate, further lowering the probability of the metal ions reaching the negative electrode.

Specifically, when the porous substrate is zoned into a first region near the first surface (on the positive electrode side) and a second region near the second surface (on the negative electrode side) having the same thickness, a content C1 of the first polysaccharide in the first region may be set larger than a content C2 of the first polysaccharide in the second region. At this time, a ratio C1/C2 of the content C1 to the content C2 is more than 1, may be 1.1 or more, 1.2 or more, and may be 1.5 or more. In other words, when the thickness of the separator (S) or porous substrate is denoted by T, 1 < P1/P2 may be satisfied where the P1 is a presence probability of the first polysaccharide in the first region from the first surface to 0.5T (center in the thickness direction), and the P2 is a probability of the first polysaccharide in the second region from a position of 0.5T (center in the thickness direction) to the second surface. The P1/P2 may be 1.2 or more, and may be 1.5 or more.

### <Method for producing separator>

Next, an example of a method for producing a separator for a secondary battery (separator (S)) according to an embodiment of the present disclosure will be described.

The production method includes: a step (I) of preparing a porous substrate having a first surface and a second surface opposite the first surface; a step (II) of preparing a solution of a first polysaccharide having a plurality of carboxyl groups (hereinafter sometimes referred to as a "polysaccharide solution"); an application step (III) of applying the polysaccharide solution onto the porous substrate; and a drying step (IV) of drying the porous substrate applied with the polysaccharide solution.

### (I) Step of preparing porous substrate

As the porous substrate, for example, a porous sheet commonly used as a separator for secondary batteries (esp., lithium-ion batteries), such as a stretched film (or microporous thin film), a nonwoven fabric, and a woven fabric, can be used. The porous sheet has a moderate mechanical strength and electrically insulating properties.

In the porous substrate, as described above, both the first surface and the second surface are preferably constituted of a polyolefin. For example, a polyolefin, such as polypropylene and polyethylene, can be used.

The porous substrate may further include a heat-resistant layer attached to at least one of the first surface and the second surface. That is, the separator according to the present embodiment encompasses the case of including a porous substrate having a heat-resistant layer and the case of including a porous substrate having no heat-resistant layer. The heat-resistant layer contains at least one of inorganic particles and a heat-resistant resin, and has higher heat-resistance than the porous substrate. The heat-resistant layer may contain an inorganic oxide filler, which is inorganic particles, as a major component (e.g., 80 mass% or more), or may contain a heat-resistant resin as a major component (e.g., 40 mass% or more). Examples of the inorganic filler include inorganic particles, such as alumina, silica, and titania. Examples of the heat-resistant resin include a polyamide resin, such as an aromatic polyamide (aramid), a polyimide resin, and a polyamide-imide resin.

The first polysaccharide exhibits high solubility in a predetermined hydrophilic solvent, and readily permeates into the porous substrate. Therefore, the first polysaccharide attaches thinly and uniformly along the pore inner walls of the porous substrate, and does not attach excessively thickly to the porous substrate surface. When the porous substrate has a heat-resistant layer, the first polysaccharide may be similarly present in the heat-resistant layer at a surface layer portion of the porous substrate and in the porous substrate. This can be confirmed by, for example, analyzing an infrared absorption spectrum obtained by FT-IR measurement. The peak intensity attributed to the carboxyl group in an infrared absorption spectrum reflected on the porous substrate may be greater than or may be approximately the same as the peak intensity attributed to the carboxyl group in an infrared absorption spectrum reflected on the heat-resistant layer. For example, the infrared absorption spectrum reflected on the heat-resistant layer side of a porous substrate having a heat-resistant layer is compared with the infrared absorption spectrum reflected on the exposed porous substrate obtained by peeling the heat-resistant layer from the porous substrate having a heat-resistant layer. This can confirm the relationship between the peak intensities.

The thickness of the porous substrate is not particularly limited, but is, for example, 1 to 50 µm, and may be 5 to 30 µm.

### (II) Step of preparing polysaccharide solution

The polysaccharide solution is prepared by mixing a first polysaccharide with a solvent, to dissolve the first polysaccharide in the solvent. The polysaccharide solution may further contain an additive other than the solvent, such as an alcohol, a phosphorus compound, a boron compound, and a sulfur compound. The polysaccharide solution contains, for example, a mixed solvent of water and ethanol, and a polysaccharide dissolved in such a mixed solvent, but is not limited thereto.

Water, an alcohol (e.g., ethanol), or a mixed solvent of water and an alcohol is desirable because they readily permeate into the porous substrate and can allow the first polysaccharide to attach to the surface and the pore inner walls of the porous substrate, but without limited thereto, any solvent capable of dissolving the first polysaccharide can be used. As at least part of the solvent, an ether such as tetrahydrofuran, an amide such as dimethylformamide, a ketone such as cyclohexanone, N-methyl-2-pyrrolidone (NMP), a mixed solvent thereof, and the like may be used. In particular, a mixed solvent of water and ethanol is desirable. The volume ratio between the water and the ethanol is, for example, water/ethanol = 20/80 to 80/20, may be water/ethanol = 40/60 to 60/40, and may be water/ethanol = 45/55 to 55/45. Especially, a mixed solvent of water and ethanol readily permeates into the porous substrate, and for example, when the thickness of the porous substrate is denoted by T, can permeate to a position of 0.5T or more from the surface of the porous substrate. The permeation into the porous substrate can be confirmed by, for example, FT-IR measurement of a cross section obtained by cutting the separator along the thickness direction. When attaching a second polysaccharide together with the first polysaccharide to the porous substrate, a polysaccharide solution may be prepared using a solvent capable of dissolving both the first polysaccharide and the second polysaccharide.

### (III) Application step

The method of applying the polysaccharide solution onto the porous substrate is not particularly limited. For example, application using various coaters, dipping, spraying, and the other methods may be adopted. The coater that can be used includes, for example, a bar coater, a gravure coater, a blade coater, a roll coater, a comma coater, a die coater, and a lip coater.

In the application step, the polysaccharide solution may be applied only onto the first surface of the porous substrate. For example, the polysaccharide solution may be applied onto the porous substrate using various coaters only on the first surface side, or the polysaccharide solution may be sprayed onto the porous substrate only on the first surface side. According to such a method, the content C1 of the first polysaccharide in the first region on the first surface side of the porous substrate can be made larger than the content C2 of the first polysaccharide in the second region on the second surface side of the porous substrate. The ratio C1/C2 of the content C1 to the content C2 may be controlled to 1.1 or more by controlling the amount of the polysaccharide solution to be applied and/or controlling the conditions for the below-described drying.

### (IV) Drying step

In the drying step, the porous substrate applied with the polysaccharide solution is dried, to complete a separator. For controlling the C1/C2 ratio as described above, the conditions for drying may be controlled, so that the first polysaccharide is allowed to migrate, together with the solvent, to the first surface side. As a result, the first polysaccharide is localized on the first surface side.

After the drying step, the separator may be rolled. A separator with high flatness can be obtained by rolling. Drying and rolling may be performed simultaneously by rolling the porous substrate applied with the polysaccharide solution, under heating with a hot roll at a temperature lower than the melting point of the material of the porous substrate.

### B. Secondary battery

A secondary battery according to an embodiment of the present disclosure includes a positive electrode, a negative electrode, a lithium-ion conductive nonaqueous electrolyte, and the above-described separator for a secondary battery (separator (S)) interposed between the positive electrode and the negative electrode. The secondary battery includes at least a nonaqueous electrolyte secondary battery, such as a lithium-ion battery, a lithium-metal secondary battery, and an all-solid-state battery. For controlling the C1/C2 ratio as described above, the separator is disposed such that the first surface is faced to the positive electrode. The nonaqueous electrolyte may be liquid as a whole (i.e., a liquid electrolyte), or may be used as a solid electrolyte or a gel electrolyte in which a liquid electrolyte is held in a matrix material.

In the secondary battery according to the present disclosure, the end-of-charge voltage may be set to 4.3 V or higher, further 4.4 V or higher, and even 4.5 V or higher. In a secondary battery having such an end-of-charge voltage (i.e., upper limit voltage), in general, the elution amount of metal ions from the positive electrode tends to increase. On the other hand, since the secondary battery according to the present disclosure includes the separator (S) containing a polysaccharide having a plurality of carboxyl groups, the probability is low of the eluted metal ions reaching the negative electrode, and thus, the metal deposition at the negative electrode can be significantly suppressed.

In the following, using a lithium-ion secondary battery as an example, the configuration of the secondary battery will be specifically described.

### [Positive electrode]

The positive electrode includes, for example, a positive electrode current collector and a positive electrode active material layer. The positive electrode active material layer is supported on one or both surfaces of the positive electrode current collector.

The positive electrode active material layer is, for example, a positive electrode mixture layer constituted of a positive electrode mixture. The positive electrode mixture contains a positive electrode active material as an essential component, and may also contain an optional component. Examples of the optional component include a binder, a conductive agent, and a thickener.

The positive electrode active material layer can be formed by, for example, applying a positive electrode slurry of a positive electrode mixture dispersed into a dispersion medium, onto a surface of a positive electrode current collector, followed by drying. The dry applied film may be rolled as necessary.

As the positive electrode current collector, a sheet of conductive material (metal foil, mesh, net, punched sheet, etc.) is used. In particular, a metal foil is preferred. Examples of the material of the positive electrode current collector include stainless steel, aluminum, an aluminum alloy, and titanium. The thickness of the positive electrode current collector is not particularly limited, but is, for example, 1 to 50 µm, and may be 5 to 30 µm.

The thickness of the positive electrode active material layer is not particularly limited, but may be, for example, 30 µm or more and 400 µm or less, and may be 50 µm or more and 250 µm or less. One positive electrode active material layer may be formed of a plurality of layers having different morphologies from each other. For example, two or more layers containing active material particles with different average particle diameters from each other may be stacked, or two or more layers differing in the type or composition of the positive electrode active material from each other may be stacked.

The average particle diameter of the particles of the positive electrode active material is, for example, 3 µm or more and 30 µm or less, and may be 5 µm or more and 25 µm or less. Here, the average particle diameter is a median diameter (D₅₀) at 50% cumulative volume in a volume-based particle size distribution obtained using a laser diffraction particle size distribution analyzer. The active material particles may be separated and collected from the positive electrode. The measuring instrument that can be used is, for example, "LA-750", available from Horiba, Ltd. (HORIBA).

The positive electrode active material may include a lithium-containing transition metal oxide. In view of achieving high capacity, it is desirable that the lithium-containing transition metal oxide includes a lithium-nickel oxide (composite oxide N) containing lithium and Ni and having a layered rock-salt type crystal structure. The proportion of the composite oxide N in the positive electrode active material is, for example, 70 mass% or more, may be 90 mass% or more, and may be 95 mass% or more. The proportion of Ni in the metal elements other than Li contained in the composite oxide N may be 50 at.% or more.

The composite oxide N is represented by, for example, a formula (1): Li_{α}Niₓ₁M1ₓ₂M2₍₁₋ₓ₁₋ₓ₂₎O_{2+β}. Here, the element M1 is at least one selected from the group consisting of V, Co, and Mn. The element M2 is at least one selected from the group consisting of Mg, Al, Ca, Ti, Cu, Zn, and Nb. The formula (1) satisfies 0.9 ≤ α ≤ 1.1, -0.05 ≤ β ≤ 0.05, 0.5 ≤ x1 < 1, 0 ≤ x2 ≤ 0.5, and 0 < 1-x1-x2 ≤ 0.5. The value of α increases and decreases during charging and discharging.

The composite oxide N contains Ni, and may further contain at least one selected from the group consisting of Co, Mn, and Al, as the element M1 and the element M2. Co, Mn, and Al contribute to stabilizing the crystal structure of the composite oxide N.

In view of achieving cost reduction and high capacity, the proportion of Co in the metal elements other than Li contained in the composite oxide N is desirably 0 at.% or more and 20 at.% or less, more desirably 0 at.% or more and 15 at.% or less.

The proportion of Mn in the metal elements other than Li may be 30 at.% or less, and may be 20 at.% or less. The proportion of Mn in the metal elements other than Li may be 1 at.% or more, may be 3 at.% or more, and may be 5 at.% or more.

The proportion of Al in the metal elements other than Li may be 10 at.% or less, or 5 at.% or less. The proportion of Al in the metal elements other than Li may be 1 at.% or more, may be 3 at.% or more, and may be 5 at.% or more.

The composite oxide N can be represented by, for example, a formula (2): Li_{α}Ni_{(1-y1-y2-y3-z)}Co_{y1}Mn_{y2}Al_{y3}M_{z}O_{2+β}. Mn and/or Al contributes to stabilizing the crystal structure of the composite oxide N with reduced Co content. The element M is an element other than Li, Ni, Co, Mn, Al, and oxygen, and may be at least one selected from the group consisting of Ti, Zr, Nb, Mo, W, Fe, Zn, B, Si, Mg, Ca, Sr, Sc, and Y The formula (2) satisfies 0.9 ≤ α ≤ 1.1, -0.05 ≤ β ≤ 0.05, 0 ≤ y1 ≤ 0.1, 0 ≤ y2 ≤ 0.6, 0 ≤ y3 ≤ 0.1, and 0 ≤ z ≤ 0.10. The symbol 1-y1-y2-y3-z (= v) representing the atomic ratio of Ni is, for example, 0.5 or more, may be 0.6 or more, 0.8 or more, or 0.85 or more, and may be 0.90 or more, or 0.95 or more. The symbol v representing the atomic ratio of Ni may be 0.98 or less, and may be 0.95 or less.

When the composite oxide N contains Co, the proportion of Co in the metal elements other than Li may be 2.0 at.% or less, and may be 1.5 at.% or less. If the Co content in the composite oxide N can be reduced, and the Ni content can be increased, this is advantageous in terms of costs, and a high capacity can be ensured. On the other hand, in general, metal ions tend to easily elute from such a composite oxide N free of Co or with low Co content. In contrast, in the secondary battery according to the present disclosure including a separator containing a polysaccharide having a carboxyl group, the probability is low of the eluted metal ions reaching the negative electrode, and thus, the metal deposition at the negative electrode can be significantly suppressed.

Examples of the conductive agent that can be contained as an optional component in the positive electrode active material layer include carbon nanotubes (CNTs), carbon fibers other than CNTs, and conductive particles (e.g., carbon black, graphite).

### [Negative electrode]

The negative electrode includes at least a negative electrode current collector, and includes, for example, a negative electrode current collector, and a negative electrode active material layer. The negative electrode active material layer is supported on one or both surfaces of the negative electrode current collector.

The negative electrode active material layer may be a negative electrode mixture layer constituted of a negative electrode mixture. The negative electrode mixture layer is in the form of a membrane or film. The negative electrode mixture contains particles of a negative electrode active material as an essential component, and may contain a binder, a conductive agent, a thickener, and the like, as optional components. A lithium metal foil or lithium alloy foil may be attached as a negative electrode active material layer to the negative electrode current collector.

The negative electrode mixture layer can be formed by, for example, applying a negative electrode slurry of a negative electrode mixture containing particles of a negative electrode active material, a binder, and the like dispersed into a dispersion medium, onto a surface of a negative electrode current collector, followed by drying the slurry. The dry applied film may be rolled as necessary.

As the negative electrode current collector, a sheet of conductive material (metal foil, mesh, net, punched sheet, etc.) is used. In particular, a metal foil is preferred. Examples of the material of the negative electrode current collector include stainless steel, nickel, a nickel alloy, copper, and a copper alloy. The thickness of the negative electrode current collector is not particularly limited, but is, for example, 1 to 50 µm, and may be 5 to 30 µm.

As the negative electrode active material, a material that electrochemically absorbs and releases lithium ions, lithium metal, a lithium alloy, and the like can be used. The material that electrochemically absorbs and releases lithium ions includes, for example, a carbon material, an alloy-type material, and the like. Examples of the carbon material include graphite, graphitizable carbon (soft carbon), and non-graphitizable carbon (hard carbon). Particularly preferred is graphite, which is stable during charging and discharging and whose irreversible capacity is small. As the alloy-type material, a material containing at least one metal capable of forming an alloy with lithium may be used, examples of which include silicon, tin, a silicon alloy, a tin alloy, and a silicon compound. Silicon oxide, tin oxide, and the like may be used.

The alloy-type material containing silicon may be, for example, a composite material including a lithium-ion conductive phase and silicon particles dispersed into the lithium-ion conductive phase. As the lithium-ion conductive phase, for example, a silicon oxide phase, a silicate phase, a carbon phase, and the like can be used. The major component (e.g., 95 to 100 mass%) of the silicon oxide phase can be silicon dioxide. In particular, a composite material constituted of a silicate phase and silicon particles dispersed into the silicate phase is preferred because of its high capacity and low irreversible capacity. Preferred as the silicate phase is a lithium silicate phase (silicate phase containing lithium), which has a small irreversible capacity and exhibits excellent initial charge-discharge efficiency.

The lithium silicate phase is an oxide phase containing lithium (Li), silicon (Si), and oxygen (O), and may contain other elements. The atomic ratio O/Si of O to Si in the lithium silicate phase is, for example, more than 2 and less than 4. Preferably, the O/Si is more than 2 and less than 3. The atomic ratio Li/Si of Li to Si in the lithium silicate phase is, for example, more than 0 and less than 4. The lithium silicate phase can have a composition represented by a formula: Li_{2z}SiO_{2+z} where 0 < z < 2. The z satisfies preferably 0 < z < 1, more preferably z = 1/2. Examples of the elements other than Li, Si and O that can be contained in the lithium silicate phase include iron (Fe), chromium (Cr), nickel (Ni), manganese (Mn), copper (Cu), molybdenum (Mo), zinc (Zn), and aluminum (Al).

The carbon phase can be composed of, for example, shapeless carbon with low crystallinity (i.e., amorphous carbon). The amorphous carbon may be, for example, a hard carbon, a soft carbon, or others.

As the binder, for example, a resin material is used. Examples of the binder include polyacrylic acid, a polyacrylate salt, and their derivatives thereof, a fluorocarbon resin, a polyolefin resin, a polyamide resin, a polyimide resin, an acrylic resin, a vinyl resin, and rubber particles. The binder may be used singly, or in combination of two or more kinds.

Examples of the conductive material include carbon nanotubes (CNTs), carbon fibers other than CNTs, and conductive particles (e.g., carbon black, graphite).

Examples of the thickener include: cellulose derivatives (e.g., cellulose ethers), such as carboxymethyl cellulose (CMC) and modified products thereof (including salts, such as Na salt), and methyl cellulose; saponified products of a polymer having a vinyl acetate unit, such as polyvinyl alcohol; and polyethers (e.g., polyalkylene oxide, such as polyethylene oxide).

### [Nonaqueous electrolyte]

The nonaqueous electrolyte may be a liquid electrolyte (electrolyte solution), may be a gel electrolyte, and may be a solid electrolyte. The liquid electrolyte (electrolyte solution) may be, for example, an electrolyte solution containing a nonaqueous solvent and a lithium salt dissolved in the nonaqueous solvent. The concentration of lithium salt in the liquid electrolyte is, for example, 0.5 mol/L or more and 2 mol/L or less. The liquid electrolyte may contain a known additive.

The gel electrolyte contains a lithium salt and a matrix polymer, or contains a lithium salt, a nonaqueous solvent, and a matrix polymer. The matrix polymer may be, for example, a polymer material that absorbs a nonaqueous solvent and turns into a gel. Examples of the polymer material include a fluorocarbon resin, an acrylic resin, a polyether resin, and polyethylene oxide.

The solid electrolyte may be an inorganic solid electrolyte. As the inorganic solid electrolyte, for example, a known material for use in all-solid lithium-ion secondary batteries and the like (e.g., oxide-based solid electrolyte, sulfide-based solid electrolyte, halide-based solid electrolyte) is used.

As the nonaqueous solvent, for example, a cyclic carbonic acid ester, a chain carbonic acid ester, a cyclic carboxylic acid ester, and the like are used. Examples of the cyclic carbonic acid ester include propylene carbonate (PC), and ethylene carbonate (EC). Examples of the chain carbonic acid ester include diethyl carbonate (DEC), ethyl methyl carbonate (EMC), and dimethyl carbonate (DMC). Examples of the cyclic carboxylic acid ester include γ-butyrolactone (GBL), and γ-valerolactone (GVL). The nonaqueous solvent may be used singly, or in combination of two or more kinds.

Examples of the lithium salt include a lithium salt of a chlorine-containing acid (LiClO₄, LiAlCl₄, LiB₁₀Cl₁₀, etc.), a lithium salt of a fluorine-containing acid (LiPF₆, LiBF₄, LiSbF₆, LiAsF₆, LiCF₃SO₃, LiCF₃CO₂, etc.), a lithium salt of a fluorine-containing acid imide (LiN(SO₂F)₂, LiN(CF₃SO₂)₂, LiN(CF₃SO₂)(C₄F₉SO₂), LiN(C₂F₅SO₂)₂, etc.), and a lithium halide (LiCl, LiBr, LiI, etc.). The lithium salt may be used singly, or in combination of two or more kinds.

The secondary battery, for example, has a structure in which an electrode group formed by winding the positive electrode and the negative electrode with the separator interposed therebetween is housed together with the liquid electrolyte in an outer body. Without limited thereto, a different form of electrode group may be adopted. For example, a stacked-type electrode group formed by stacking the positive electrode and the negative electrode with the separator interposed therebetween may be adopted. The form of the battery is also not limited, and may be, for example, cylindrical, prismatic, coin, button, or laminate type.

In the following, a structure of a secondary battery will be described with reference to FIG. 1. FIG. 1 is a longitudinal cross-sectional view of a cylindrical nonaqueous secondary battery 10 which is an example of the present embodiment. The present disclosure, however, is not limited to the following configuration.

The secondary battery 10 includes an electrode group 18, a liquid electrolyte (not shown), and a bottomed cylindrical battery can 22 housing them. A sealing assembly 11 is clamped onto the opening of the battery can 22, with a gasket 21 interposed therebetween. This seals the inside of the battery. The sealing assembly 11 includes a valve body 12, a metal plate 13, and an annular insulating member 14 interposed between the valve body 12 and the metal plate 13. The valve body 12 and the metal plate 13 are connected to each other at their respective centers. A positive electrode lead 15a extended from the positive electrode plate 15 is connected to the metal plate 13. Therefore, the valve body 12 functions as a positive external terminal. A negative electrode lead 16a extended from the negative electrode plate 16 is connected to the bottom inner surface of the battery can 22. An annular groove 22a is formed near the open end of the battery can 22. A first insulating plate 23 is placed between one end surface of the electrode group 18 and the annular groove 22a. A second insulating plate 24 is placed between the other end surface of the electrode group 18 and the bottom of the battery can 22. The electrode group 18 is formed of the positive electrode plate 15 and the negative electrode plate 16 wound together, with the separator 17 interposed therebetween.

In the following, the present invention will be specifically described with reference to Examples and Comparative Examples. The present invention, however, is not limited to the following Examples.

### «Example 1»

A separator was produced in the following procedure.

### (I) Step of preparing porous substrate

As a porous substrate, a 12-µm-thick microporous thin film made of polyethylene (air permeability 108 sec/100 mL) was prepared. The microporous thin film is a biaxially stretched film commonly used as it is as a separator for lithium-ion secondary batteries.

### (II) Step of preparing polysaccharide solution

A polysaccharide solution containing 0.25 parts by mass of arabic gum (first polysaccharide), 49.75 parts by mass of water, and 50 parts by mass of ethanol was prepared. The arabic gum was completely dissolved in the polysaccharide solution.

### (III) Application step

The polysaccharide solution was spray-applied onto the microporous thin film only on one surface (i.e., the first surface). In this way, the content C1 of the first polysaccharide in the first region on the first surface side of the microporous thin film was set higher than the content C2 of the first polysaccharide in the second region on the second surface side.

### (IV) Drying step

In the drying step, the porous substrate applied with the polysaccharide solution was dried at 60 °C for 3 hours, with the first surface side directed upward and with the second surface side placed on a mounting table. A separator with the first polysaccharide attached thereto was produced.

The air permeability of the obtained separator was 100 sec/100 mL or more and 500 sec/100 mL or less. In an IR spectrum of the separator measured by FT-IR, various peaks attributed to the arabic gum including those of C=O bond, O-H bond, and C-O bond were observed. Furthermore, the presence of the carboxyl group was confirmed by GC-MS.

Onto the separator attached with the first polysaccharide, 2 µL of propylene carbonate (PC) was dropped. After passage of 5 minutes, the diameter of the PC was measured. The result is shown in Table 1.

### «Example 2»

A separator was produced in the same manner as in Example 1 and evaluated, except that in the polysaccharide solution preparation step, a polysaccharide solution containing 0.175 parts by mass of xanthan gum (first polysaccharide), 49.825 parts by mass of water, and 50 parts by mass of ethanol was prepared.

The air permeability of the obtained separator was 100 sec/100 mL or more and 500 sec/100 mL or less. In an IR spectrum of the separator measured by FT-IR, various peaks attributed to the xanthan gum including those of C=O bond, O-H bond, and C-O bond were observed. Furthermore, the presence of the carboxyl group was confirmed by GC-MS. The result of evaluation of dropping PC in the same manner as in Example 1 is shown in Table 1.

### «Example 3»

A separator was produced in the same manner as in Example 1 and evaluated, except that in the polysaccharide solution preparation step, a polysaccharide solution containing 0.125 parts by mass of arabic gum (first polysaccharide), 0.125 parts by mass of x-carrageenan (second polysaccharide), 49.75 parts by mass of water, and 50 parts by mass of ethanol was prepared.

The air permeability of the obtained separator was 100 sec/100 mL or more and 500 sec/100 mL or less. In an IR spectrum of the separator measured by FT-IR, various peaks attributed to the arabic gum including those of C=O bond, O-H bond, and C-O bond and various peaks attributed to the x-carrageenan including those of S=O bond, C-O-S bond, and C-O bond were observed. Furthermore, the presence of the carboxyl group and the sulfo group was confirmed by GC-MS. The result of evaluation of dropping PC in the same manner as in Example 1 is shown in Table 1.

### «Example 4»

A separator was produced in the same manner as in Example 1 and evaluated, except that in the polysaccharide solution preparation step, a polysaccharide solution containing 0.088 parts by mass of xanthan gum (first polysaccharide), 0.125 parts by mass of x-carrageenan (second polysaccharide), 49.787 parts by mass of water, and 50 parts by mass of ethanol was prepared.

The air permeability of the obtained separator was 100 sec/100 mL or more and 500 sec/100 mL or less. In an IR spectrum of the separator measured by FT-IR, various peaks attributed to the xanthan gum including those of C=O bond, O-H bond, and C-O bond and various peaks attributed to the x-carrageenan including those of S=O bond, C-O-S bond, and C-O bond were observed. Furthermore, the presence of the carboxyl group and the sulfo group was confirmed by GC-MS. The result of evaluation of dropping PC in the same manner as in Example 1 is shown in Table 1.

### <<Comparative example 1>>

Onto the microporous thin film before attaching the first polysaccharide thereto, PC was dropped in the same manner as in Example 1. The evaluation result is shown in Table 1.

### <<Comparative example 2»

In the polysaccharide solution preparation step, an attempt was made to prepare a solution of locust bean gum, which was a polysaccharide, in the same manner as in Example 1, but the locust bean gum was not dissolved in the mixed solvent of water and ethanol, failing to obtain a polysaccharide a solution.

### <<Comparative example 3»

In the polysaccharide solution preparation step, an attempt was made to prepare a solution of guar gum, which was a polysaccharide, in the same manner as in Example 1, but the guar gum did not dissolve in the mixed solvent of water and ethanol, failing to obtain a polysaccharide solution.

**[Table 1]**

| | polysaccharides | | | | | diameter of PC measured 5 min after dropping (mm) |
|---|---|---|---|---|---|---|
| | first polysaccharide | concentration of first polysaccharide (mass%) | second polysaccharide | concentration of second polysaccharide (mass%) | other polysaccharides | |
| Ex. 1 | arabic gum | 0.25 | - | - | - | 4.3 |
| Ex. 2 | xanthan gum | 0.175 | - | - | - | 5.2 |
| Ex. 3 | arabic gum | 0.125 | κ-carrageenan | 0.125 | - | 5.2 |
| Ex. 4 | xanthan gum | 0.088 | κ-carrageenan | 0.125 | - | 4.8 |
| Com. Ex. 1 | - | - | - | - | - | 3.5 |
| Com. Ex. 2 | - | - | - | - | locust bean gum | unmeasurable |
| Com. Ex. 3 | - | - | - | - | guar gum | unmeasurable |

The diameters of the PC measured 5 minutes after dropping onto the separators of Example 1 and Example 2 to which the first polysaccharide having a carboxyl group was attached were larger than the diameter of the PC measured 5 minutes after dropping onto the microporous thin film before the first polysaccharide was attached (Comparative Example 1). The results confirmed that the wettability or permeability of the separator with the electrolyte was enhanced by the attachment of the first polysaccharide. This was presumably because the first polysaccharide attached thinly and uniformly along the pore inner walls of the separator without blocking the pores, and the wettability of the separator with the liquid electrolyte was significantly improved.

Furthermore, in the separators of Examples 3 and 4 in which the second polysaccharide having a sulfo group was attached together with the first polysaccharide, similar results to those in the separators of Examples 1 and 2 were obtained. The second polysaccharide, too, like the first polysaccharide, has high solubility in a mixed solvent of water and ethanol. Therefore, the first and second polysaccharides are considered to have attached thinly and uniformly along the inner pore wall of the separator without blocking the pores, and significantly improved the wettability of the separator with the liquid electrolyte.

### [Industrial Applicability]

A separator for a secondary battery according to the present disclosure and a secondary battery including the separator are useful as main power sources for mobile communication devices, portable electronic devices, electric cars, and the like.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Reference Signs List]

10: secondary battery, 11: sealing assembly, 12: valve body, 13: metal plate, 14: insulating member, 15: positive electrode plate, 15a: positive electrode lead, 16: negative electrode plate, 16a: negative electrode lead, 17: separator, 18: electrode group, 21: gasket, 22: battery can, 22a: groove, 23: first insulating plate, 24: second insulating plate

## Claims

1. A separator for a secondary battery, comprising:
a porous substrate having a first surface and a second surface opposite the first surface; and
a first polysaccharide attached to pore inner walls of the porous substrate,
the first polysaccharide having a carboxyl group.

2. The separator for a secondary battery according to claim 1, wherein the first polysaccharide is attached at least to the first surface.

3. The separator for a secondary battery according to claim 1 or 2, wherein the first surface and the second surface are both constituted of a polyolefin.

4. The separator for a secondary battery according to any one of claims 1 to 3,
wherein a thickness of the first polysaccharide attached to the pore inner walls of the porous substrate is 40 nm or less.

5. The separator for a secondary battery according to any one of claims 1 to 4,
wherein an air permeability measured by a method specified in JIS P 8117 is 100 sec/100 mL or more and 500 sec/100 mL or less.

6. The separator for a secondary battery according to any one of claims 1 to 5, further comprising
a heat-resistant layer attached to at least one of the first surface and the second surface of the porous substrate,
the heat-resistant layer containing at least one of inorganic particles and a heat-resistant resin.

7. The separator for a secondary battery according to claim 6, wherein, a peak intensity attributed to the carboxyl group in an infrared absorption spectrum reflected on the porous substrate is greater than a peak intensity attributed to the carboxyl group in an infrared absorption spectrum reflected on the heat-resistant layer.

8. The separator for a secondary battery according to any one of claims 1 to 7, wherein the first polysaccharide includes at least one of arabic gum and xanthan gum.

9. The separator for a secondary battery according to any one of claims 1 to 8, further comprising
a second polysaccharide attached to the porous substrate,
the second polysaccharide having a sulfo group.

10. The separator for a secondary battery according to any one of claims 1 to 9, wherein the second polysaccharide includes carrageenan.

11. The separator for a secondary battery according to any one of claims 1 to 10, wherein a number of moles of the carboxyl group included in the first polysaccharide per unit mass is 1.0×10⁻⁶ mol/g or more and 1.0×10⁻² mol/g or less.

12. The separator for a secondary battery according to any one of claims 1 to 11, wherein an amount of the first polysaccharide attached to the porous substrate per apparent unit area is 1.0×10⁻⁵ g/m² or more and 5.0×10⁻¹ g/m² or less.

13. The separator for a secondary battery according to any one of claims 1 to 12, wherein
when the porous substrate is zoned into a first region near the first surface and a second region near the second surface having the same thickness,
a content C1 of the first polysaccharide in the first region is larger than a content C2 of the first polysaccharide in the second region.

14. The separator for a secondary battery according to claim 13, wherein a ratio C1/C2 of the content C1 to the content C2 is 1.1 or more.

15. A secondary battery, comprising:
a positive electrode; a negative electrode; a lithium-ion conductive nonaqueous electrolyte; and a separator interposed between the positive electrode and the negative electrode, wherein
the separator is the separator for a secondary battery of any one of claims 1 to 14, and
the first surface is faced to the positive electrode.

16. The secondary battery according to claim 15, wherein an end-of-charge voltage is 4.3 V or more.

17. The secondary battery according to claim 15 or 16, wherein
the positive electrode contains a lithium-containing transition metal oxide, as active material particles,
the lithium-containing transition metal oxide contains Li and Ni, and includes a lithium-nickel oxide having a layered rock-salt type crystal structure, and
a proportion of Ni in metal elements other than Li contained in the lithium-nickel oxide is 50 at.% or more.

18. The secondary battery according to claim 17, wherein when the lithium nickel oxide contains Co, a proportion of Co in the metal elements other than Li is 2.0 at.% or less.

19. A method for producing a separator for a secondary battery, the method comprising:
a step of preparing a porous substrate having a first surface and a second surface opposite the first surface;
a step of preparing a solution of a first polysaccharide having a carboxyl group;
an application step of applying the solution onto the porous substrate; and
a drying step of drying the porous substrate applied with the solution.

20. The method for producing a separator for a secondary battery according to claim 19, wherein the solution contains a mixed solvent of water and ethanol, and the first polysaccharide dissolved in the mixed solvent.

21. The method for manufacturing a secondary battery separator according to claim 19 or 20, wherein in the application step, the solution is applied onto the first surface of the porous substrate.
